# EUROPEAN PATENT APPLICATION

(11) **EP 4 300 626 A1**
(43) Date of publication of application: **03.01.2024**
(21) Application number: 22156661.5
(22) Date of filing: 14.02.2022
(51) Int. Cl.: H01M 4/24, H01M 4/32, H01M 10/24, H01M 10/44, H01M 50/30, H01M 10/42, H01M 4/02

(54) **METHOD FOR RECOVERING CAPACITY OF ALKALINE RECHARGEABLE BATTERY**

(30) Priority: 14.05.2021 JP 2021082314
(71) Applicant: Primearth EV Energy Co., Ltd., Kosai-shi, Shizuoka 431-0422 (JP)
(72) Inventor: MUROTA, Yosuke, Kosai-shi, 431-0422 (JP); SUDO, Ryosuke, Kosai-shi, 431-0422 (JP); ISHINO, Sunao, Kosai-shi, 431-0422 (JP)
(74) Representative: Westphal, Mussgnug & Partner Patentanwälte mbB

(57) **Abstract**

A method using a charging-discharging device and a controller controlling the charging-discharging device is for recovering capacity of an alkaline rechargeable battery that includes a positive electrode and an electrolyte. The positive electrode includes an active material that includes nickel hydroxide as a main component. The electrolyte includes an alkaline solution. The method includes a high-rate charging step (S43) of charging at a higher charge rate when the SOC of the alkaline rechargeable battery is higher than a minimum length SOC, which refers to the SOC when the nickel hydroxide has a minimum c-axis length (L), than a low-rate charging (S41) performed when the SOC is lower than the minimum length SOC. The method further includes a high-rate discharging (S45). Alkaline ion species is discharged from the positive electrode so that protons (H⁺) diffuse in the positive electrode to recover the capacity of the positive electrode.

## Description

### FIELD

The present disclosure relates to a method for recovering the capacity of an alkaline rechargeable battery, more specifically, a method for recovering the capacity of an alkaline rechargeable battery that increases the battery capacity of the positive electrode.

### BACKGROUND

When an electric motor is mounted on an electric vehicle (including a hybrid vehicle and a fuel cell vehicle), the electric motor is driven by power stored in a rechargeable battery. In such a rechargeable battery, an alkaline rechargeable battery such as a nickel-metal hydride battery is capable of charging and discharging a large current and thus is widely used for a vehicle.

When a rechargeable battery is used for an electric vehicle or the like, the distance the electric vehicle can travel is affected by a capacity maintenance rate, which is the ratio of the presently maintained battery capacity to the battery capacity in the initial state. Japanese Laid-Open Patent Publication No. 2018-40629 proposed a method for accurately estimating the battery capacity of a nickel-metal hydride battery using a Nyquist diagram based on an electrochemical impedance technique.

In a typical alkaline rechargeable battery such as a nickel-metal hydride battery, the negative electrode has a larger capacity than the positive electrode. Thus, the battery capacity is limited by the positive electrode (hereafter, referred to as "positive electrode limitation").

The nickel-metal hydride battery may be, for example, in the form of a battery pack or a battery module and transferred by a ship or stored before being mounted on a vehicle. When the nickel-metal hydride battery is left in a high-temperature or low-temperature environment for a long time without being charged as described above, the capacity of the positive electrode may decrease. Also, when the nickel-metal hydride battery is mounted on a vehicle such as a hybrid vehicle, the capacity of the positive electrode may decrease if left in a severe environment.

In such a case, in the nickel-metal hydride battery having a positive electrode limitation, decreases in the capacity of the positive electrode directly decrease the overall capacity of the battery.

In this regard, Japanese Laid-Open Patent Publication No. 2019-114439 discloses a method for manufacturing a nickel-metal hydride battery that includes a first step of preparing a first nickel-metal hydride battery. The first nickel-metal hydride battery has a positive electrode including nickel hydroxide Ni(OH)₂. The method further includes a second step of performing a 600% overcharging on the prepared first nickel-metal hydride battery to manufacture a second nickel-metal hydride battery. The 600% overcharging is a process that supplies the first nickel-metal hydride battery with power, the amount of which corresponds to 600% of the rated capacity of the first nickel-metal hydride battery. When the capacity of the nickel-metal hydride battery is decreased, the method described above increases the capacity of the positive electrode.

### SUMMARY

The invention disclosed in Japanese Laid-Open Patent Publication No. 2018-40629 increases the capacity of the positive electrode. However, in an alkaline rechargeable battery such as a nickel-metal hydride battery, when the internal pressure is increased by overcharging, the valve opens. When the valve is open, the alkaline electrolyte is discharged to the outside of the system together with the high-pressure gas. The decrease in the electrolyte causes a decrease in the output of the alkaline rechargeable battery.

It is an objective of the present disclosure to provide a method for recovering the capacity of an alkaline rechargeable battery that recovers the capacity of a positive electrode while avoiding a decrease in output that occurs when a valve is open.

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

An aspect of the present disclosure is a method for recovering capacity of an alkaline rechargeable battery that includes a positive electrode and an electrolyte. The positive electrode includes an active material that includes nickel hydroxide as a main component. The electrolyte includes an alkaline solution. The method includes charging and discharging the alkaline rechargeable battery using a charging-discharging device and a controller configured to control the charging-discharging device. The method includes a high-rate charging step of charging the alkaline rechargeable battery at a high charge rate when a state of charge (SOC) of the alkaline rechargeable battery is in a high SOC region. The SOC of the alkaline rechargeable battery is referred to as a minimum length SOC when the nickel hydroxide has a minimum c-axis length. The high SOC region is a region of the SOC that is higher than the minimum length SOC. A low SOC region is a region of the SOC that is lower than the minimum length SOC. The high charge rate is higher than a charge rate of a low-rate charging performed when the SOC of the alkaline rechargeable battery is in the low SOC region.

In the method described above, the high-rate charging may be terminated at a charge termination SOC that is set to a limit SOC before a valve of the alkaline rechargeable battery opens.

The method described above may further include a positive electrode capacity estimating step of estimating a positive electrode capacity of the alkaline rechargeable battery, and a charge termination SOC setting step of setting the charge termination SOC based on the positive electrode capacity of the alkaline rechargeable battery that is estimated by the positive electrode capacity estimating step.

In the method described above, a charge rate of the high-rate charging may be set in accordance with a decrease amount of the positive electrode capacity of the alkaline rechargeable battery.

In the method described above, a relationship among the positive electrode capacity, the charge termination SOC, and the charge rate may be stored in advance as a map.

In the method described above, the high-rate charging may be performed when the positive electrode capacity of the alkaline rechargeable battery is less than or equal to a threshold value.

In the method described above, the minimum length SOC may be 15% to 25%.

In the method described above, the charge termination SOC may be 60% to 100%. In the method described above, the high-rate charging may charge the alkaline rechargeable battery at a charge rate that is greater than or equal to 1C. In the method described above, the alkaline rechargeable battery may include a nickel-metal hydride battery.

The method for recovering the capacity of the alkaline rechargeable battery described above is suitably applied when the alkaline rechargeable battery is a nickel-metal hydride battery.

According to the present disclosure, the method for recovering the capacity of the alkaline rechargeable battery recovers the capacity of the positive electrode while avoiding a decrease in output that occurs when the valve is open.

Other features and aspects will be apparent from the following detailed description, the drawings, and the claims.

### BRIEF DESCRIPTION OF THE DRAWINGS

Fig. 1 is a schematic diagram showing a layer structure of nickel hydroxide, which is an active material of a positive electrode in an embodiment.
Fig. 2 is a graph showing the relationship between state of charge (SOC) of a nickel-metal hydride battery and c-axis length of nickel hydroxide.
Fig. 3 is a graph showing the relationship of the charge rate, SOC, and the change rate in c-axis length.
Fig. 4 is a flowchart showing the steps of a method for recovering the capacity of the nickel-metal hydride battery in the embodiment.
Fig. 5 is a cross-sectional partial view showing the structure of the nickel-metal hydride battery in the embodiment.
Fig. 6 is a block diagram showing a schematic structure of an embodiment of a battery capacity measurement device.
Fig. 7 is an example of a Nyquist diagram formed from measured alternating current impedance of the battery.
Fig. 8 is a map showing an example of the relationship among the capacity maintenance rate [%] of the nickel-metal hydride battery before being recovered, the high-rate charge termination SOC [%], and the charge rate [C].
Fig. 9 is a graph showing recoveries of the capacity when the charge termination SOC is 80% and the recovery charge is performed at the charge rate of 1C and the charge rate of 5C.
Fig. 10 is a flowchart showing the steps of recovery charge.
Fig. 11 is a time chart showing SOC [%] during the recovery charge.

Throughout the drawings and the detailed description, the same reference numerals refer to the same elements. The drawings may not be to scale, and the relative size, proportions, and depiction of elements in the drawings may be exaggerated for clarity, illustration, and convenience.

### DESCRIPTION OF THE EMBODIMENTS

This description provides a comprehensive understanding of the methods, apparatuses, and/or systems described. Modifications and equivalents of the methods, apparatuses, and/or systems described are apparent to one of ordinary skill in the art. Sequences of operations are exemplary, and may be changed as apparent to one of ordinary skill in the art, with the exception of operations necessarily occurring in a certain order. Descriptions of functions and constructions that are well known to one of ordinary skill in the art may be omitted.

Exemplary embodiments may have different forms, and are not limited to the examples described. However, the examples described are thorough and complete, and convey the full scope of the disclosure to one of ordinary skill in the art.

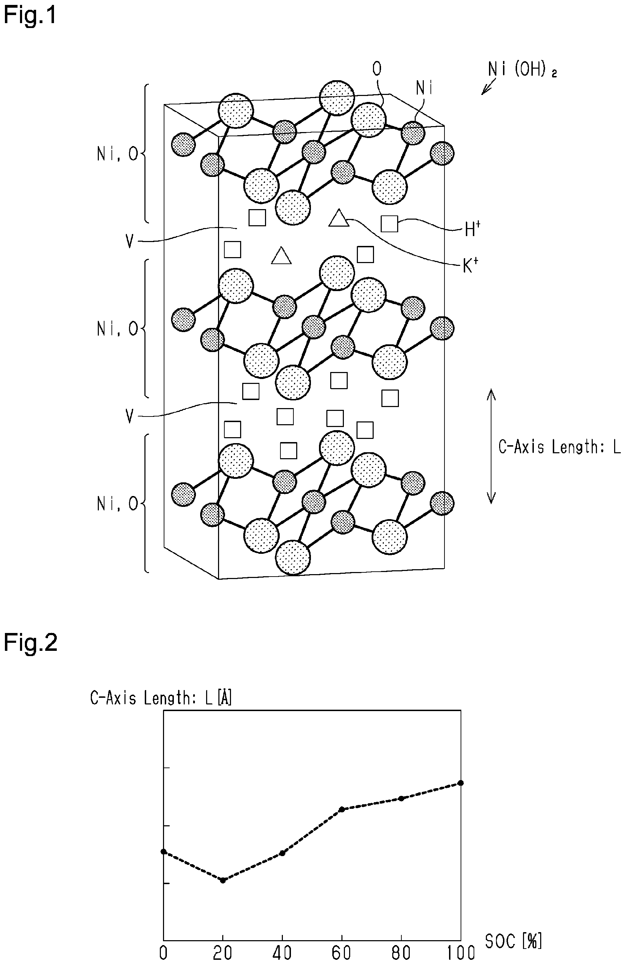

A method for recovering the capacity of an alkaline rechargeable battery according to the present disclosure will now be described using an embodiment of a method for recovering the capacity of a battery module of a nickel-metal hydride battery 10 (hereafter, may be referred to as "battery 10") with reference to Figs. 1 to 11. In the present embodiment, charging and discharging based on the present embodiment of the method for recovering the capacity of the nickel-metal hydride battery is referred to as "recovery charge." High-rate discharging may be included in the recovery charge.

### Configuration of Present Embodiment

In the recovery charge, a known charging-discharging device and a controller configured to control the charging-discharging device are used and are not shown in the drawings. An example of an alkaline rechargeable battery that is subject to the recovery and includes a positive electrode, which includes an active material including nickel hydroxide (Ni(OH)₂) as the main component, and an electrolyte, which includes an alkaline solution, is a nickel-metal hydride battery that includes an electrolyte containing potassium hydroxide (KOH).

### Nickel-Metal Hydride Battery

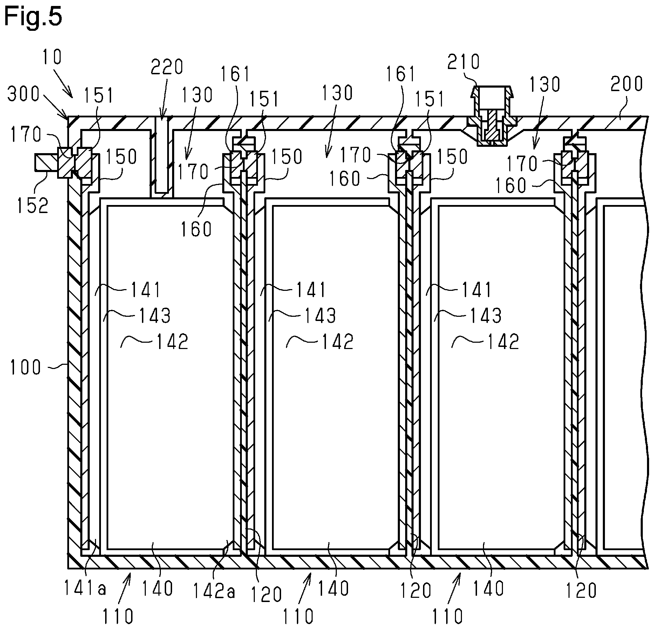

Fig. 5 is a cross-sectional partial view showing the structure of the nickel-metal hydride battery in the embodiment. An example of the nickel-metal hydride battery 10, which forms a battery module that is the subject of the capacity recovery method of the present embodiment, will now be described. As shown in Fig. 5, the nickel-metal hydride battery is a sealed battery and is used as a power supply for a vehicle such as an electric vehicle or a hybrid vehicle. A known nickel-metal hydride battery mounted on a vehicle is a sealed rectangular rechargeable battery including a battery module obtained by connecting battery cells 110 in series to obtain a desired power capacity.

The battery module includes a rectangular case 300 having the form of a rectangular box. The rectangular case 300 includes an integral battery container 100 capable of accommodating the battery cells 110 and a lid 200 sealing the integral battery container 100. The rectangular case 300 may be formed from resin.

The integral battery container 100 of the rectangular case 300 is formed from a synthetic resin material that is resistant to an alkaline electrolyte, which is, for example, polypropylene or polyethylene. The battery cells 110 are separated by partition walls 120 arranged in the integral battery container 100. Each portion separated by the partition walls 120 defines a battery container 130 for each battery cell 110. The integral battery container 100 includes, for example, six battery containers 130. Fig. 5 shows four battery containers 130.

Each of the battery containers 130, which are separated as described above, accommodates an electrode plate group 140, a positive current collector plate 150, and a negative current collector plate 160 together with the electrolyte. The positive current collector plates 150 and the negative current collector plates 160 are located at opposite sides of the electrode plate group 140.

The electrode plate group 140 is formed by stacking a rectangular positive plate 141 and a negative plate 142 on opposite sides of a separator 143. The direction in which the positive plate 141, the negative plate 142, and the separator 143 are stacked (direction orthogonal to the plane of Fig. 5) is referred to the stacking direction. The positive plate 141 and the negative plate 142 of the electrode plate group 140 project from opposite side portions in a planar direction (direction extending along the plane of Fig. 5) to define a lead portion 141a of the positive plate 141 and a lead portion 142a of the negative plate 142. The current collector plates 150 and 160 are bonded to side edges of the lead portions 141a and 142a, respectively.

A through hole 170 extends through an upper portion of each partition wall 120 to connect the battery containers 130. Two connection projections 151 and 161 respectively project from an upper portion of the current collector plate 150 and an upper portion of the current collector plate 160 and are welded to each other in the through hole 170. As a result, the electrode plate groups 140 of the battery containers 130 that are located adjacent to each other are electrically connected in series. A positive connection terminal 152 and a negative connection terminal are attached to upper parts of side walls of the integral battery container 100 through the through holes 170 located at an outer side of the battery containers 130 located at opposite ends. The positive connection terminal 152 is welded to the connection projection 151 of the current collector plate 150. The negative connection terminal is welded to the connection projection 161 of the current collector plate 160. Thus, the total output of the electrode plate groups 140 that are connected in series, that is, the battery cells 110, is drawn out from the positive connection terminal 152 and the negative connection terminal.

The lid 200 of the rectangular case 300 includes an exhaust valve 210 and a sensor receptacle 220. The exhaust valve 210 is configured to set the internal pressure of the rectangular case 300 to be less than or equal to a valve opening pressure. The sensor receptacle 220 receives a sensor configured to detect the temperature of the electrode plate groups 140. The sensor receptacle 220 extends through the battery container 130 to the proximity of the electrode plate groups 140 so that the temperature of the electrode plate groups 140 is measurable.

The exhaust valve 210 is configured to maintain the internal pressure of the integral battery container 100 at an allowable threshold value or less. When the internal pressure is greater than or equal to the valve opening pressure that is greater than the allowable threshold value, the exhaust valve 210 opens to discharge gasses produced in the integral battery container 100. When the nickel-metal hydride battery is overcharged, gas may be produced by a side reaction and increase the internal pressure. When the internal pressure exceeds the threshold value, the exhaust valve 210 opens. When the exhaust valve 210 is open, high-pressure gas is discharged. The electrolyte is also discharged out of the system. In this case, in addition to the gas such as hydrogen and oxygen, liquid such as water (H₂O) and non-volatile components such as potassium hydroxide (KOH) are reduced. As a result, the capacity is decreased due to the scarcity of the electrolyte. Overcharging may occur even when the SOC is less than 100% if the charging efficiency is decreased. In addition, overcharging is more likely to occur as the charge rate is increased. Also, when the current density is non-uniform due to nonuniformity caused by metal deposition on the electrode plates or foreign matter, partial overcharging may occur. The internal pressure of the integral battery container 100 is uniform in all of the battery containers 130 because of connection holes (not shown) formed in the partition walls 120. Therefore, the integral battery container 100 discharges the gas until the internal pressure, which is uniform in all of the battery containers 130, becomes less than the valve opening pressure. Consequently, the internal pressure is maintained at a value that is less than the valve opening pressure.

### Structure of Electrode Plate Group 140

### Positive Plate 141

The positive plate 141 includes nickel hydroxide and cobalt as active materials. Specifically, a conductive agent such as cobalt hydroxide or metallic cobalt powder is added to nickel hydroxide to form a paste. In addition, if necessary, an appropriate amount of a thickener such as carboxymethyl cellulose and a binder such as polytetrafluoroethylene are added. The paste is applied to or fills a core such as a three-dimensional porous nickel foamed body and then is dried, rolled, and cut to obtain the positive plate 141 that is plate-shaped. The three-dimensional porous nickel foamed body is obtained by plating a urethane framework surface of urethane foam with nickel and then burning down the urethane foam.

### Negative Plate 142

The negative plate 142 includes, for example, a hydrogen absorbing alloy formed of mischmetal, nickel, aluminum, cobalt, and manganese as an active material. Mischmetal is a mixture of rare earth elements such as lanthanum, cerium, and neodymium. Specifically, a conductive agent such as carbon black is added to the hydrogen absorbing alloy. If necessary, a thickener such as carboxymethyl cellulose and a binder such as a styrene-butadiene copolymer are also added to form a paste. The paste of the hydrogen absorbing alloy is applied to or fills a core such as perforated metal (active material support body) and then is dried, rolled, and cut to obtain the negative plate 142 that is plate-shaped.

### Separator143

The separator 143 may be a non-woven cloth of olefinic resin such as polypropylene. If necessary, the non-woven cloth may undergo a hydrophilic treatment such as sulfonation.

### Layer Structure of Nickel Hydroxide

Fig. 1 is a schematic diagram showing the layer structure of nickel hydroxide, which is the active material of the positive electrode in the present embodiment. In a nickel-metal hydride battery having nickel hydroxide (Ni(OH)₂) as the positive active material, nickel hydroxide (Ni(OH)₂) has a layer structure. The layer structure includes nickel oxide (Ni, O) formed of nickel (Ni) and oxygen (O) and "the gap V" disposed therebetween. In this application, the direction in which the layers of nickel oxide are stacked is referred to as "the c-axis." In the c-axis direction in which nickel oxides are stacked, the distance between nickel oxides is referred to as "the c-axis length L." The c-axis length [□] was measured through X-ray diffraction (XRD) complying with Japanese Industrial Standards (JIS) K 0131-1996, that is, general rules for X-ray diffractometric analysis.

When the c-axis length L is increased, nickel oxides are separated by a greater distance, and the gap V is increased. When the gap V is increased, a greater amount of proton (H⁺) is absorbed.

### Presence of Alkaline Ion Species in Positive Electrode

The alkaline rechargeable battery of the present embodiment is a nickel-metal hydride battery in which potassium hydroxide (KOH), sodium hydroxide (NaOH), or lithium hydroxide (LiOH) is used as the electrolyte. As shown in Fig. 1, for example, an alkaline ion species such as potassium ions (K⁺) derived from potassium hydroxide (KOH) is drawn into the gap. In this state, the alkaline ion species present in the gap may decrease the absorption amount of proton (H⁺). Consequently, the capacity of the positive electrode is decreased. The diffusion of proton (H⁺) in the positive electrode is improved by removing the alkaline ion species from the positive electrode. Thus, the capacity of the positive electrode is recovered from the decreased state. Accordingly, the capacity of the alkaline rechargeable battery, which has the positive electrode limitation, is recovered.

### SOC for Removing Alkaline Ion Species from Positive Electrode

When the extension amount of the c-axis is relatively large, the alkaline ion species is efficiently removed from the positive electrode. Therefore, the extension amount of the c-axis needs to be increased to remove the alkaline ion species from the positive electrode.

Fig. 2 is a graph showing the relationship between state of charge (SOC) [%] of the nickel-metal hydride battery and the c-axis length L [□] of nickel hydroxide. As shown in the graph, the c-axis length L [□] changes in accordance with SOC [%]. In the nickel-metal hydride battery of the present embodiment, when SOC is approximately 20%, the c-axis length L [□] is minimal. In this application, the SOC corresponding to the minimum c-axis length L is referred to as "the minimum length SOC." In the present embodiment, when SOC is greater than 20%, the c-axis length L [□] increases. Also, when SOC is less than 20%, the c-axis length L [□] increases. The changes in the c-axis length L [□] indicate that the absorption amount of proton (H⁺) is minimal when SOC is 20%. That is, in the present embodiment, the minimum length SOC is approximately 20%. The present embodiment is implemented when the minimum length SOC of an alkaline rechargeable battery is set to approximately 15% to 25%.

### Charge Rate [C] for Removing Alkaline Ion Species from Positive Electrode

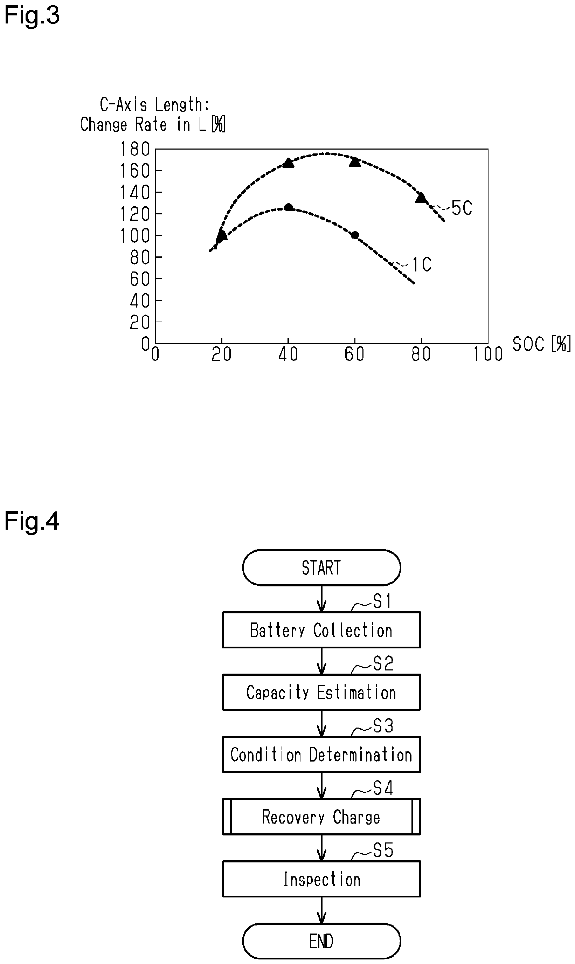

Fig. 3 is a graph showing the relationship between SOC [%] and the change rate [%] of the c-axis length L when the charge rate is 1C and 5C. As a condition for calculating SOC [%] and the change rate [%] of the c-axis length L, the change rate [%] of the c-axis length L corresponds to a change in the SOC between ±20%. More specifically, the change rate [%] of the c-axis length L at 20% of SOC is obtained when 20% of SOC is changed between ±20%, that is, the SOC is changed from 0% to 40%. In this calculation, the change rate [%] of the c-axis length L is considered 100% when the SOC is 20%.

The graph shown in Fig. 3 indicates that when the value of SOC [%] is increased from 20%, the change rate [%] of the c-axis length L is increased regardless of the charge rate.

In this case, the maximum change rate is approximately 120% when the charge rate is small, that is, 1C. The maximum change rate is approximately 180%, when the charge rate is large, that is, 5C. That is, as the charge rate is increased, the change rate [%] of the c-axis length L is increased.

When the charge rate is 1C and is small, the change rate [%] of the c-axis length L is decreased approximately when SOC [%] becomes greater than 60%. When the charge rate is 5C and is large, the change rate [%] of the c-axis length L is increased approximately until SOC [%] becomes greater than 80%, and then the change rate [%] of the c-axis length L is decreased.

This shows that a large charge rate is effective in greatly changing the c-axis length. In addition, in this case, the efficient SOC changes depending on the discharge rate. As the discharge rate is increased, an appropriate upper limit SOC [%] is increased.

### Charging in Low SOC Region

In general, in a low SOC region where SOC is less than 20%, the charging efficiency is low. Hence, even at a high charge rate, the charging is not effective and ends up producing a side reaction. Therefore, although the characteristics differ between batteries, in the present embodiment, low-rate charging, for example, at a charge rate of 1C or less is preferred in the low SOC region, where SOC is less than approximately 20%. In the present embodiment, the minimum length SOC and a border value between the low SOC region and a high SOC region are both 20% and equal to each other. However, the minimum length SOC and the border value do not necessarily have to be equal. The border value between the low SOC region and the high SOC region, that is, the border value between the low-rate charging and high-rate charging, does not have to be exact and may be set to the proximity of the minimum length SOC taking the charging efficiency into consideration. The border value between the low SOC region and the high SOC region is not restricted and may be optimized for producing the effect of recovering the battery by one skilled in the art.

### Charge Termination SOC

Generally, in a deteriorated nickel-metal hydride rechargeable battery, the charging efficiency is decreased in the high SOC region (for example, 60% to 80% or higher). When the high-rate charging (for example, 1C to 3C or greater) is performed in the high SOC region, a side reaction occurs and produces gas due to the decreased charging efficiency. This increases the internal pressure of the battery. The internal pressure may become a specified value or higher and increase the possibility of opening the valve. Limit numeral values differ in the allowable charge rate depending on deterioration of the nickel-metal hydride battery. When the nickel-metal hydride battery is deteriorated, the upper limit SOC [%] having a low possibility of opening the valve is referred to as the charge termination SOC. The charge termination SOC is not restricted and may be determined in accordance with the deterioration degree, that is, the capacity maintenance rate [%]. In the present embodiment, for example, the deterioration degree is set to 70%, 80%, and 90%. The charge termination SOC is set to 60%, 70%, and 80% for the deterioration degrees of 70%, 80%, and 90%, respectively.

### High-Rate Discharging

As described above, there are conditions for removing alkaline ion species from the positive electrode. There is also a finding that in addition to a quick increase in the c-axis length L [□], a quick decrease in the c-axis length L [□] is effective in removing alkaline ion species from the positive electrode. The inventors have found through study that when the charge termination SOC is reached, high-rate discharging of the nickel-metal hydride battery 10 is effective in removing alkaline ion species from the positive electrode. Hence, when the charge termination SOC is reached, a high-rate discharging is performed. In the present embodiment, the nickel-metal hydride battery 10 is discharged, for example, at a discharge rate of 1C or greater. The high-rate discharging is performed until a discharge termination SOC is reached. The discharge termination SOC is not restricted and may be determined based on the condition of the battery, subsequent recharging, or tests of the battery capacity. In the present embodiment, the discharge termination SOC is set to, for example, 20%.

### SOC Region and Charge Rate for High-Rate Charging

The study described above shows that when the SOC is higher than the minimum length SOC (in this embodiment, approximately 20%), charging is effective in recovering the battery. At this time, charging at a higher charge rate is more effective. For example, 5C is more effective than 1C. It is desirable that the SOC for charging is set to the charge termination SOC taking into consideration the possibility of opening the valve. It is also desirable that the charge rate is optimized taking into consideration the deterioration of the battery, that is, the pre-recovery capacity maintenance rate [%].

In the present embodiment, the conditions for the recovery charge are determined taking into consideration the aspects described above.

### Operation of Present Embodiment

In the present embodiment, based on the above-described technical concepts, the method for recovering the nickel-metal hydride battery is performed as follows to implement its operation.

### Capacity Recovery Method of Nickel-Metal Hydride Battery

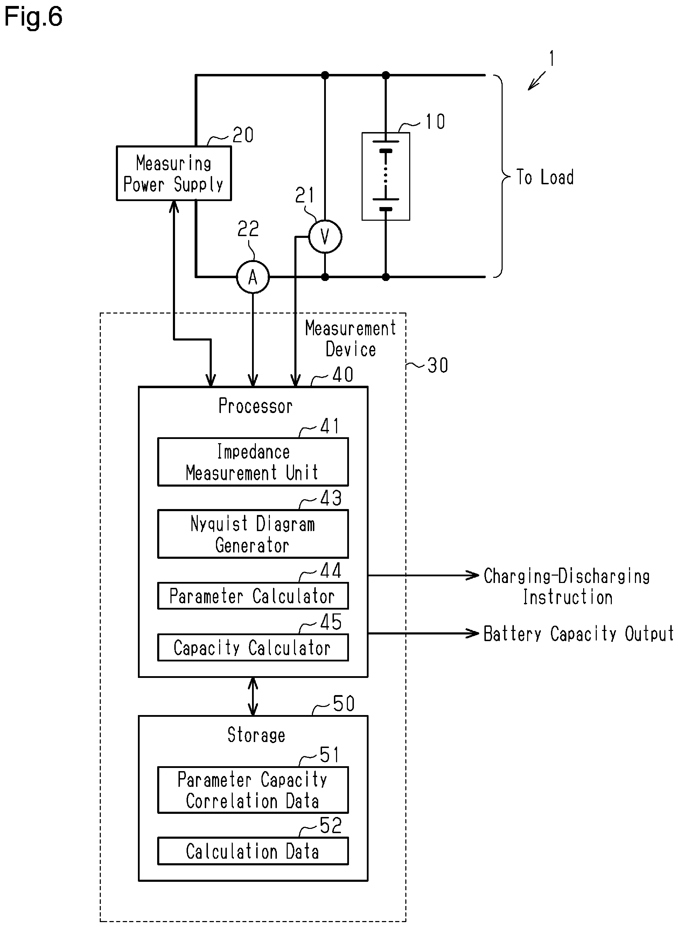

Fig. 4 is a flowchart showing an example of steps in a method for recovering the capacity of the nickel-metal hydride battery in the present embodiment. In the present embodiment, the steps in the method for recovering the capacity of the nickel-metal hydride battery are as follows. A battery that is subject to recovery is collected (S1) and placed on a battery capacity measurement unit 1 of a recovery device (refer to Fig. 6). The battery capacity measurement unit 1 estimates the capacity (S2). After the capacity of the battery is estimated, the charge and discharge rates and the conditions of SOC are determined based on the capacity (S3). The recovery charge is performed based on the determined conditions (S4). When the recovery charge is completed, for example, the battery capacity, the internal resistance, and the self-discharging are inspected (S5). This completes the steps in the method for recovering the capacity of the nickel-metal hydride battery in the present embodiment. The steps will now be described in detail.

### Collection of Battery (S1)

The method for recovering the nickel-metal hydride battery in the present embodiment is suitable for recovering a battery described below. A nickel-metal hydride battery used for a vehicle may be, for example, transferred by a ship or stored in the state of a battery pack or a battery module before being mounted on a vehicle. When the nickel-metal hydride battery is left in a high-temperature or low-temperature environment for a long time without being charged as described above, the capacity of the positive electrode may decrease. Also, when the nickel-metal hydride battery is mounted on a vehicle such as a hybrid vehicle, the capacity of the positive electrode may decrease when the vehicle travels in a severe environment. Such a nickel-metal hydride battery has the positive electrode limitation and thus is effectively recovered when alkaline ion species is removed from the positive electrode. This recovery is not limited to the battery described above and may be performed on a used battery. A collected nickel-metal hydride battery is processed in the form of a battery module or a battery pack.

When the battery is collected (S1), the collected battery is placed on the battery capacity measurement unit 1.

### Capacity Estimation (S2)

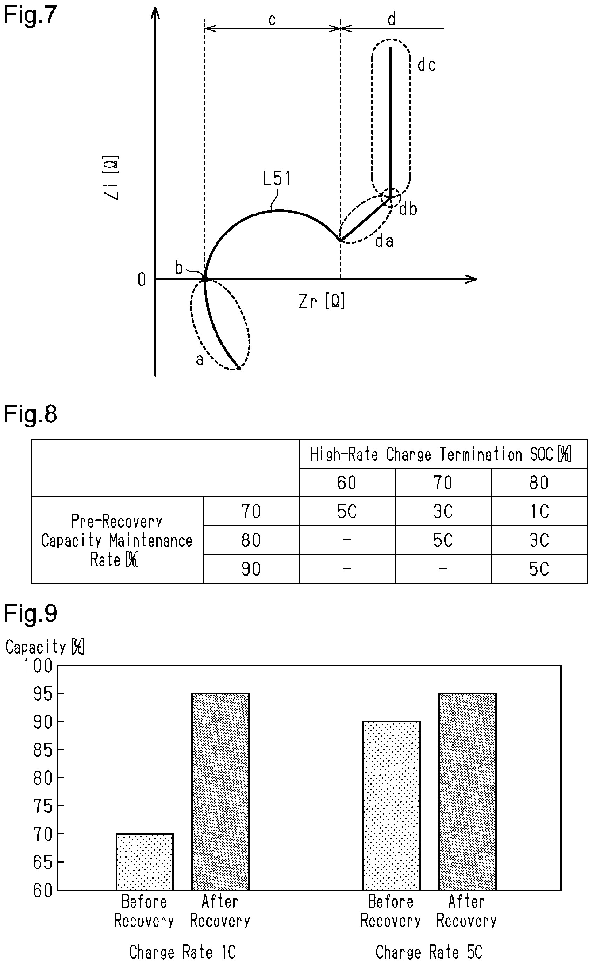

Fig. 6 is a block diagram showing the schematic structure of the battery capacity measurement unit 1. Fig. 7 is an example of a Nyquist diagram created from alternating current impedance measured from the battery. The capacity estimation step (S2) will be described with reference to Figs. 6 and 7. The detail of the capacity estimation step is described in "battery capacity measurement device for measuring battery capacity of a rechargeable battery and method for measuring battery capacity used in the battery capacity measurement device" of Japanese Laid-Open Patent Publication No. 2018-40629. Therefore, the capacity estimation step will be briefly described.

### Battery Capacity Measurement Unit 1 of Nickel-Metal Hydride Battery

A measurement device 30 is a battery capacity measurement device that measures the battery capacity and the capacity maintenance rate of a battery 10 and will be described with reference to Fig. 6. As shown in Fig. 6, the battery 10 is the subject of the measurement of the battery capacity and is connected, for example, to a load or a charger by a switch (not shown). When the switch is closed, the battery 10 is connected to the load or the like and is charged or discharged, so that the charge amount changes. When complex impedance is measured, the switch is open, so that the battery 10 is disconnected from the load or the like.

A measuring power supply 20, a voltage measurement unit 21, and a current measurement unit 22 are connected between electrodes of the battery 10. The measuring power supply 20 supplies alternating current to the battery 10 as alternating current power. The voltage measurement unit 21 measures the battery between the electrodes of the battery 10. The current measurement unit 22 measures the current that flows between the measuring power supply 20 and the battery 10.

The measuring power supply 20 generates alternating current having a predetermined measurement frequency and outputs the alternating current between the electrodes of the battery 10. The measuring power supply 20 is configured to change the measurement frequency of alternating current. An output current and a frequency range of the measurement frequency are set in the measuring power supply 20. The measuring power supply 20 outputs alternating current of the set output current at a measurement frequency that changes in the set frequency range. The set frequency range is, for example, from 100 kHz, which is an upper limit value of the high-frequency side, to 1 mHz, which is a lower limit value of the low-frequency side. However, the set frequency range is not restricted. The upper limit value of the high-frequency side may be greater than 100 kHz. The lower limit value of the low-frequency side may be less than 1mHz. The frequency range may be set for "the linear region da" of "the diffusion region d" shown in Fig. 7. The set frequency range may be, for example, from 0.1 Hz to 0.01 Hz. Moreover, two or more different frequencies in the diffusion region d, for example, frequencies in a range of 0.1 Hz to 0.01 Hz, may be output. As described above, the angular speed and the frequency have a relationship of "Angular Speed = 2π × Frequency." For the sake of convenience, both the angular speed and the frequency will be used in the description.

The measuring power supply 20 outputs a signal related to the set value of alternating current that is being output and a signal related to the set value of the measurement frequency to the measurement device 30. In addition, the measuring power supply 20 outputs alternating current and stops the outputting in accordance with a signal that starts outputting and a signal that stops outputting that are received from the measurement device 30.

The voltage measurement unit 21 outputs a voltage signal corresponding to the voltage measured between the electrodes of the battery 10 to the measurement device 30.

The current measurement unit 22 outputs a current signal corresponding to the current measured between the measuring power supply 20 and the battery 10 to the measurement device 30.

The measurement device 30 measures the battery capacity and the capacity maintenance rate of the battery 10. The measurement device 30 may display the measured battery capacity and capacity maintenance rate of the battery 10 or may output the measured battery capacity and capacity maintenance rate of the battery 10 to an external device. For example, an external battery controller (not shown) may be configured to control charging and discharging of the battery 10 in accordance with the capacity of the battery 10 that is output from the measurement device 30.

The measurement device 30 receives a voltage signal from the voltage measurement unit 21 to obtain the voltage between the terminals of the battery 10 from the received voltage signal. The measurement device 30 receives a current signal from the current measurement unit 22 to obtain the current flowing between the measuring power supply 20 and the battery 10 from the received current signal. The measurement device 30 obtains the output setting of alternating current and the measurement frequency that is being output based on a signal received from the measuring power supply 20.

The measurement device 30 includes a processor 40 and storage 50. The processor 40 executes a calculation process related to measurement of the present capacity of the battery 10. The storage 50 stores information used in the calculation process of the capacity of the battery 10.

The storage 50 is a nonvolatile storage device such as a hard disk or flash memory and stores various types of data. In the present embodiment, the storage 50 stores correlation data 51 of capacity and a parameter needed for calculating the battery capacity. The storage 50 also stores calculation data 52. For example, the capacity of the battery 10 that is in the initial state is set as the calculation data 52.

The processor 40 includes a microcomputer including a CPU, a ROM, a RAM, and the like. The processor 40, for example, executes various programs stored in the ROM or the RAM with the CPU, so that various processes in the processor 40 are executed. In the present embodiment, the processor 40 executes a process that calculates the battery capacity and a process that calculates the capacity maintenance rate of the battery. The processor 40 may use, for example, the voltage, the current, and the measurement frequency obtained by the measurement device 30. The processor 40 is configured to transmit data to and from the storage 50.

The processor 40 includes an impedance measurement unit 41 that measures a complex impedance Z, a Nyquist diagram generator 43 that generates a Nyquist diagram, a parameter calculator 44 that calculates a parameter, and a capacity calculator 45 that calculates the battery capacity and the capacity maintenance rate.

The impedance measurement unit 41 executes a process that measures the complex impedance Z of the battery 10 (impedance measuring step). The impedance measurement unit 41 instructs the measuring power supply 20 to start and end the measurement. The impedance measurement unit 41 measures the complex impedance Z of the battery 10 based on voltage and current that are obtained from the start to the end of the measurement. The unit of the complex impedance Z is ohm [Ω]. The complex impedance Z has vector components, that is, a real component Zr [Ω] and an imaginary component Zi [Ω], and is expressed by an equation "Z = Zr - jZi," where j is an imaginary unit. In the description hereafter, the unit [Ω] is omitted.

As shown in Fig. 7, the Nyquist diagram generator 43 generates a Nyquist diagram from the real component Zr and the imaginary component Zi based on the complex impedance Z of different measurement frequencies.

In the Nyquist diagram shown in Fig. 7, the diffusion region d includes the linear region da, the perpendicular region dc, and the region db. The linear region da is a region in which the ratio of a change amount of the real component to a change amount of the imaginary component is in a range of predetermined values proximate to one. That is, the linear region da is a range proximate to an angle of 45° in the diagram. In other words, in the linear region da, the absolute value of the change amount of the imaginary component relative to the real component of the complex impedance is greater than or equal to 0.5 and less than or equal to 2. Thus, the linear region da has a correlation between the imaginary component and the real component. In the perpendicular region dc, only the imaginary component greatly changes relative to the real component. In the diagram, the graph changes perpendicularly. That is, the perpendicular region dc is a range proximate to an angle of 90° in the diagram. The region db is the border changing from the linear region da to the perpendicular region dc and the peripheral region of the border.

Although not described in detail, using such a Nyquist diagram, the present capacity of the rechargeable battery is calculated based on the value of complex impedance included in the diffusion region d. The imaginary component of the complex impedance tends to be greatly changed depending on temperature. However, in the diffusion region, the difference in the imaginary component of the complex impedance depending on temperature tend to be small. Therefore, when the difference in the imaginary component of the complex impedance in the diffusion region d is used, the effect of temperature on the battery 10 is reduced. In addition, when information showing the relationship between the capacity of the battery 10 and a parameter Q_{D}, that is, a calibration curve, is used, the capacity of the battery 10 is further appropriately calculated and measured. For example, the parameter Q_{D} is calculated based on a difference Δ (ω⁻¹) between reciprocals of measured angular speeds of two complex impedances and a difference ΔZi between imaginary components of the two complex impedances.

### Condition Determination (S3)

Fig. 8 is a map showing an example of the relationship among the capacity maintenance rate [%] of the nickel-metal hydride battery before being recovered, the high-rate charge termination SOC [%], and the charge rate [C].

As described above, when the pre-recovery capacity maintenance rate [%] is low, the charging efficiency is decreased. In this case, in the capacity estimating step (S2), a range of SOC having a low possibility of opening the valve is estimated based on the estimated capacity of the battery 10. The possibility of opening the valve also varies depending on the charge rate. In the present embodiment, the relationship among the pre-recovery capacity maintenance rate [%], the charge termination SOC [%] of the high-rate charging, and the charge rate [C] is determined based on actual measurement and theoretical estimation of the same type of the battery 10. As shown in Fig. 8, a map showing the determined relationship among the pre-recovery capacity maintenance rate [%], the charge termination SOC [%] of the high-rate charging, and the charge rate [C] is generated and stored in a storing means of the controller of the recovery device (charging-discharging device) and used as reference.

As shown in Fig. 8, for example, when the pre-recovery capacity maintenance rate is 70% and the charge rate is 5C and thus is high, the charge termination SOC is set to 60%. Even when the pre-recovery capacity maintenance rate is 70% and thus is the same, the possibility of opening the valve is decreased if the charge rate is decreased to 3C. In this case, the charge termination SOC is increased to 70%. When the pre-recovery capacity maintenance rate is 70% and thus is the same and the charge rate is further decreased to 1C, the possibility of opening the valve is further decreased. In this case, the charge termination SOC is increased to 80%. The process time and the deterioration state of the battery are taken into consideration for determining which one of the combinations is selected.

In the same manner, when the pre-recovery capacity maintenance rate is 80% and the charge rate is 5C and thus is high, the charge termination SOC is set to 70%, which is increased from when the pre-recovery capacity maintenance rate is 70%. Even when the pre-recovery capacity maintenance rate is 80% and thus is the same, the possibility of opening the valve is decreased if the charge rate is decreased to 3C. In this case, the charge termination SOC is increased to 80%.

When the pre-recovery capacity maintenance rate is 90%, that is, deterioration is small, the charge rate may be set to 5C, that is, a high rate, and the charge termination SOC may be increased and set to 80%.

Fig. 9 is a graph showing recoveries of the capacity when the charge termination SOC is set to 80% and the recovery charge is performed at the charge rate of 1C and the charge rate of 5C. The left side of the graph shows the recovery charge that is performed at the charge rate of 1C when the pre-recovery capacity maintenance rate is 70%. Upon completion of the recovery charge, the capacity is recovered to 95%. Since the charge rate is 1C and thus is a low rate, overcharging will not occur even when the charging efficiency is decreased. Thus, the possibility of the valve opening is low. However, the charge time is five times longer than that when the charge rate is 5C.

The right side of the graph shows the recovery charge that is performed at the charge rate of 5C when the pre-recovery capacity maintenance rate is 90%. Upon completion of the recovery charge, the capacity is recovered to 95%. Since the pre-recovery capacity maintenance rate is 90%, that is, deterioration is small, the charge rate may be set to 5C, that is, a high rate. The high charging efficiency allows for charging in a short time. Since the charging efficiency is high, overcharging will not occur even when the high rate charging is performed. Thus, the possibility of the valve opening is low.

As described above, the storing means of the controller stores the map showing the relationship among the pre-recovery capacity maintenance rate [%], the charge termination SOC [%] of the high-rate charging, and the charge rate [C]. With reference to the map, the optimal charge rate [C] and the optimal charge termination SOC [%] of the high-rate charging are determined from the pre-recovery capacity maintenance rate [%] of the nickel-metal hydride battery. The recovery charge is performed in accordance with the selected combination.

### Recovery Charge (S4)

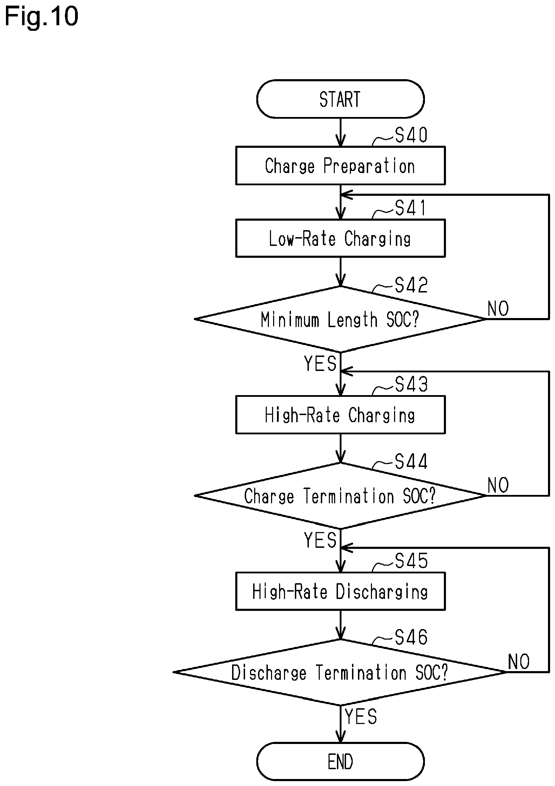

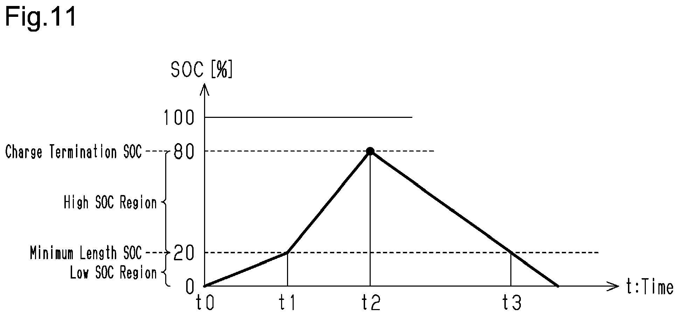

Fig. 10 is a flowchart showing the steps of the recovery charge. Fig. 11 is a time chart showing the SOC [%] during the recovery charge. The steps of the recovery charge (S4) will be described with reference to Figs. 10 and 11. In the recovery charge (S4), the controller executes charge preparation (S40), low-rate charging (S41), high-rate charging (S43), and high-rate discharging (S45) in this order while monitoring the SOC of the battery 10. The steps will now be described in detail.

### Charge Preparation (S40)

When the recovery charge process is started, the charge preparation step (S40) is executed. In the charge preparation (S40), the battery 10 is placed on a charging-discharging device (not shown). The charging-discharging device includes a controller including a computer. The controller executes control so that the battery 10 is charged and discharged to the predetermined SOC at predetermined charging and discharging rates. In addition, the controller constantly detects and controls the state of the battery 10 based on sensors such as a voltmeter, an ammeter, and a thermometer. When the SOC of the battery 10 is greater than 20%, which is the minimum length SOC, preliminary discharging is performed until the SOC is decreased to the low SOC region, which is lower than the minimum length SOC, so that the high-rate charging (S43) is sufficiently performed.

### Low-Rate Charging (S41)

Next, the low-rate charging (S41) is performed. The low-rate charging starts charging at a low rate, for example, less than 1C, from when the SOC is in the low SOC region, which is less than 20%, for example, when the SOC is 0%. In Fig. 11, time t0 refers to the time at which the charging is started. During the low-rate charging (S41), the controller estimates the SOC while detecting the state of the battery 10. When the battery 10 does not exceed 20%, which is the minimum length SOC (S42: NO), the controller continues the low-rate charging (S41).

### High-Rate Charging (S43)

At time t1, when the SOC reaches 20% (S42: YES), the charge rate is increased from the low-rate charging to, for example, the high rate of 3C, so that the high-rate charging (S43) is performed. When the SOC is increased by the high-rate charging (S43), the c-axis length L extends and the gap V increases, which are shown in Fig. 1. As a result, reactions in nickel hydroxide (Ni(OH)₂) become active, and alkaline ion species such as potassium ions (K⁺) that had been drawn in the positive electrode diffuse into the electrolyte and are removed from the gap V.

During the high-rate charging (S43), the controller estimates the SOC while detecting the state of the battery 10. When the battery 10 does not exceed 80%, which is the charge termination SOC (S44: NO), the controller continues the high-rate charging (S43).

At time t2, when the SOC of the battery 10 reaches 80% (S44: YES), the controller terminates the high-rate charging (S43).

### High-Rate Discharging (S45)

When the high-rate charging (S43) is terminated, the high-rate discharging (S45) is performed. When the high-rate charging (S43) is terminated at time t2, the high-rate discharging (S45) is immediately started.

The high-rate discharging is performed at a high discharge rate, for example, 3C. The high-rate discharging shortens the c-axis length L, which had extended during the high-rate charging, and decreases the gap V. As a result, alkaline ion species such as potassium ions (K⁺) drawn in the positive electrode diffuse into the electrolyte and are removed from the gap V.

In the high-rate charging (S43), alkaline ion species such as potassium ions (K⁺) have a tendency to diffuse in the electrolyte. In this state, the c-axis length L is suddenly decreased so as to decrease the gap V. This facilitates the discharging of alkaline ion species such as potassium ions (K⁺) from the positive electrode.

During the high-rate discharging (S45), the controller estimates the SOC while detecting the state of the battery 10. When the battery 10 does not become less than 20%, which is the discharge termination SOC (S46: NO), the controller continues the high-rate discharging (S45).

At time t3, when the SOC of the battery 10 reaches 20% (S46: YES), the controller terminates the high-rate discharging (S45).

The recovery charge process (S4) then ends (END).

### Inspection (S5)

The steps in the method for recovering the capacity of the nickel-metal hydride battery in the present embodiment will be described with reference to Fig. 4. When the recovery charge (S4) is completed, the inspection (S5) is executed.

The inspection may again accurately estimate the capacity through a process similar to the capacity estimation (S2). Alternatively, the inspection may simply use the charging-discharging device so that the controller measures the battery open circuit voltage (OCV) and the internal resistance. Battery modules that have passed the inspection are stacked and accommodated in a battery case and shipped as a vehicle on-board battery, which is a battery pack including a controller and a sensor.

### Effects of Present Embodiment

The method for controlling the nickel-metal hydride battery of the present embodiment, which includes the configuration described above, has the following effects.
(1) With the method for recovering the capacity of the nickel-metal hydride battery 10 of the present embodiment, the capacity of the positive electrode is recovered when the battery has been left for a long time and the capacity has decreased.
(2) The recovery of the capacity of the positive electrode recovers the overall capacity of the nickel-metal hydride battery 10, which has a positive electrode limitation.
(3) The capacity of the positive electrode is recovered while avoiding a decrease in output that occurs when the valve is opened. Thus, loss of the electrolyte and gases caused when the valve is opened is avoided, and consequent deterioration of the nickel-metal hydride battery 10 is avoided.
(4) The recovery charge includes the high-rate charging step, which performs charging at a higher charge rate when the SOC is higher than the minimum length SOC than when the SOC is lower than the minimum length SOC. The minimum length SOC is the SOC of the positive electrode corresponding to the minimum c-axis length of nickel hydroxide. With this configuration, even when the battery has deteriorated and the charging efficiency is decreased, overcharging will not occur. Thus, generation of gas is limited. Accordingly, the internal pressure of the battery will not be increased, so that the possibility of the valve opening is extremely low.
(5) The method particularly includes the positive electrode estimating step (S2) of estimating the capacity of the positive electrode of the nickel-metal hydride battery 10 and the charge termination SOC setting step (S3) of setting the charge termination SOC based on the capacity of the positive electrode estimated by the positive electrode estimation step.
(6) In the high-rate charging (S43), the charge rate is set in accordance with the decrease amount of the capacity of the positive electrode of the battery. The recovery charge is effectively performed while the possibility of opening the valve is lowered. Thus, the state of the battery is correctly detected, and the appropriate recovery charge is performed safely and quickly.
(7) The relationship among the capacity of the positive electrode, the charge termination SOC, and the charge rate is stored as a map in advance. Thus, the recovery charge is appropriately performed without an excess load on the controller.
(8) The high-rate discharging (S45) together with the high-rate charging (S43) further effectively discharges alkaline ion species such as potassium ions (K⁺) from the positive electrode.
(9) The alkaline rechargeable battery of the present embodiment is a nickel-metal hydride battery and thus is suitable for being used as a vehicle on-board battery that has a large charge density.
(10) In the method for recovering the capacity of the nickel-metal hydride battery 10 of the present embodiment, a conventional charging-discharging device and a conventional controller may be used. Thus, there is no need for a specialized device and additional implementation cost.

### Modified Examples

The embodiment may be modified as follows.

The time chart shown in Fig. 11 is one embodiment of the invention. The order of the low-rate charging (S41), the high-rate charging (S43), and the high-rate discharging is not limited to that shown in the time chart and may be changed.

As shown in Fig. 11, the high-rate charging of the present embodiment is performed at a fixed charge rate that is determined by the pre-recovery capacity maintenance rate. In the present invention, the high-rate charging does not necessarily have to be performed at a fixed charge rate. The charge rate may be decreased when the SOC of the battery is increased. For example, when the pre-recovery capacity maintenance rate is 70%, the charging is performed at the charge rate of 5C until the SOC of the battery reaches 60%. When the SOC of the battery exceeds 60%, the charging is performed at the charge rate of 3C until the SOC of the battery reaches 70%. When the SOC of the battery exceeds 70%, the charging may be performed at the charge rate of 1C until the SOC of the battery reaches 80%, which is the charge termination SOC.

In the present embodiment, the high-rate discharging is performed immediately after the high-rate charging. However, the high-rate discharging may be omitted.

In the present embodiment, the completing and switching the low-rate charging (S41), the high-rate charging (S43), and the high-rate discharging (S45) are determined based on the SOC. However, there is no limitation to such a configuration. The determination may be made based on elapsed time synchronizing with takt time or battery voltage with reference to data collected in advance.

The capacity of the nickel-metal hydride battery is estimated based on a Nyquist diagram using an electrochemical impedance technique. However, there is no limitation on the capacity estimating method. The estimation may be made based on the open voltage OCV of the battery or the battery current during actual charging and discharging. In addition, deterioration of the battery may be theoretically estimated based on the usage history of the battery or the thermal environment.

The present embodiment is described using a hybrid vehicle as an example. Alternatively, for example, a fuel cell vehicle, which includes a fuel cell generating power and an alkaline rechargeable battery storing the power, may be used.

Further, the present embodiment may be applied to the controlling of an electric vehicle (EV) having a deteriorated alkaline rechargeable battery and a decreased capacity maintenance rate when the electric vehicle is charged at a power station.

Furthermore, the present embodiment may be applied to the controlling of a home battery that includes a power generating installation such as a photovoltaic system or a wind power generation system.

The nickel-metal hydride battery of the present embodiment exemplifies an assembled battery that includes a vehicle on-board battery module. However, the nickel-metal hydride battery may be used for a purpose other than on-board use. In addition, the shape of the nickel-metal hydride battery is not limited and may be cylindrical.

A nickel-metal hydride battery that is subject to control is not limited to a battery module and may be a battery cell or a battery pack.

The active material of the positive electrode is nickel hydroxide (Ni(OH)₂), which may become nickel oxide hydroxide (NiOOH) depending on the charge state.

In the present embodiment, a nickel-metal hydride battery is described as an example of an alkaline rechargeable battery. Alternatively, an alkaline battery that includes an alkaline electrolyte and Ni(OH)₂ as the positive electrode such as nickel-cadmium rechargeable battery may be used.

The battery capacity [%], the SOC [%], the charging and discharging rates [C], and the time [s] used in the present embodiment are examples and may be optimized by one skilled in the art in accordance with the properties of a battery used as the subject. The threshold value is optimized in the same manner.

The charge termination SOC is set to 60% to 80%. However, the charge termination SOC may be set to be greater than 80% as long as the opening of the valve is avoided. Further, as long as the opening of the valve is avoided, the charging may be performed when the SOC exceeds 100%.

The flowcharts shown in Figs. 4 and 10 are examples. One skilled in the art may change the order of the steps, add a step, and omit a step.

One skilled in the art may add, remove, and change components within the scope of the claims.

The controller of the present disclosure may be configured to be a computer system that includes at least one processor and non-transitory memory (non-transitory computer readable medium) that stores instructions (computer programs) executable by the processor to cause the processor to execute control according to any one of the above-described embodiment and modified examples. An example of the control is the recovery charge step (S4) shown in the flowchart of Fig. 10. The processor may include a central processing unit (CPU), a graphics processing unit (GPU), or a dedicated hardware circuit such as an application specific integrated circuit (ASIC) or a combination of these. The non-transitory computer readable medium includes an optical disc storage device, a magnetic disc storage device, a magnetic storage device, and a flash memory such as random access memory (RAM), read only memory (ROM), and CD-ROM. The non-transitory computer readable medium further includes any other medium that can be used for storing desired program codes in the form of instructions or data structures and can be accessed from a computer.

All features disclosed in the specification and/or claims are intended to be disclosed separately and independently from each other for the purpose of the original disclosure and for the purpose of limiting the invention disclosed in the scope of claims independently from combinations of features in the embodiments and/or claims. All of the statements describing a numerical range or a set of components disclose any possible intermediate value or intermediate component for the purpose of the original disclosure and for the purpose of limiting the invention disclosed in the scope of claims especially as limitation of the numerical range.

## Claims

1. A method for recovering capacity of an alkaline rechargeable battery (10) that includes a positive electrode and an electrolyte, the positive electrode including an active material that includes nickel hydroxide as a main component, and the electrolyte including an alkaline solution, the method including charging and discharging the alkaline rechargeable battery (10) using a charging-discharging device and a controller configured to control the charging-discharging device, the method being **characterized by**:
a high-rate charging step (S43) of charging the alkaline rechargeable battery (10) at a high charge rate when a state of charge (SOC) of the alkaline rechargeable battery (10) is in a high SOC region, wherein
the SOC of the alkaline rechargeable battery (10) is referred to as a minimum length SOC when the nickel hydroxide has a minimum c-axis length (L),
the high SOC region is a region of the SOC that is higher than the minimum length SOC,
a low SOC region is a region of the SOC that is lower than the minimum length SOC, and
the high charge rate is higher than a charge rate of a low-rate charging (S41) performed when the SOC of the alkaline rechargeable battery (10) is in the low SOC region.

2. The method according to claim 1, **characterized in that** the high-rate charging (S43) is terminated at a charge termination SOC that is set to a limit SOC before a valve of the alkaline rechargeable battery (10) opens.

3. The method according to claim 2, **characterized by**:
a positive electrode capacity estimating step (S2) of estimating a positive electrode capacity of the alkaline rechargeable battery (10); and
a charge termination SOC setting step (S3) of setting the charge termination SOC based on the positive electrode capacity of the alkaline rechargeable battery (10) that is estimated by the positive electrode capacity estimating step (S2).

4. The method according to claim 3, **characterized in that** a charge rate of the high-rate charging (S43) is set in accordance with a decrease amount of the positive electrode capacity of the alkaline rechargeable battery (10).

5. The method according to claim 4, **characterized in that** a relationship among the positive electrode capacity, the charge termination SOC, and the charge rate is stored in advance as a map.

6. The method according to any one of claims 3 to 5, characterize in that the high-rate charging (S43) is performed when the positive electrode capacity of the alkaline rechargeable battery (10) is less than or equal to a threshold value.

7. The method according to any one of claims 1 to 6, **characterized in that** the minimum length SOC is 15% to 25%.

8. The method according to claim 2, **characterized in that** the charge termination SOC is 60% to 100%.

9. The method according to any one of claims 1 to 8, **characterized in that** the high-rate charging (S43) charges the alkaline rechargeable battery (10) at a charge rate that is greater than or equal to 1C.

10. The method according to any one of claims 1 to 9, **characterized in that** the alkaline rechargeable battery (10) includes a nickel-metal hydride battery.
